# EUROPEAN PATENT APPLICATION

(11) **EP 0 900 764 A1**
(43) Date of publication of application: **10.03.1999**
(21) Application number: 97919670.6
(22) Date of filing: 24.04.1997
(51) Int. Cl.: C02F 1/28, C02F 1/48, B01D 35/06

(54) **WATER PURIFYING METHOD AND DEVICE UTILIZING FLUID PHYSICAL PROPERTY CHANGES AT ACTIVE CARBON INTERFACE BY A DYNAMO-ELECTRIC PHENOMENON**

(30) Priority: 19.07.1996 JP 220252/96
(71) Applicant: Kabushiki Kaisha Takai Seisakusho, Hamamatsu-city, Shizuoka 430 (JP); Imai, Masaki, Hamamatsu-city, Shizuoka 432 (JP)
(72) Inventor: IMAI, Masaki, Hamamatsu-city, Shizuoka 432 (JP)
(74) Representative: Kehl, Günther, Dipl.-Phys.
(86) International application number: JP9701424
(87) International publication number: WO9803432

(57) **Abstract**

All substances including H₂O in untreated water are charged by establishing an electric field on the in-flow side of a water purifying device and passing the water through the electric field. As the charged, untreated water passes through a nonlinear water passage filled with active carbon, the water is freed of the materials other than H₂O. Electricity as a natural phenomenon on the earth, active cabin as a carbonaceous material serving as a source of life, and a nonlinear water passage are combined to pack a water circulating process of the earth into a water purifying device, which removes pollutant in water that are produced from the daily activities of humans and industries.

## Description

### Technical field

This invention is on the method and device removing pollutants in water (hereinafter referred to as "untreated water") polluted by various factor, by means of passing through the space equipped with electrodes ("the electric field") and to adsorb them with active carbon.

### Background technology

The majority of the existing water purifying device utilizes following methods;
1) To pass untreated water through absorbents such as active carbon, zeolite and ceramic and to remove substances in untreated water within the capacity of the absorbents.
2) To pass untreated water through reverse osmosis or hollow fiber membrane and to remove substances by means of filtering.
3) To adsorb and to filter substances by combining the above 1) and 2).
4) To separate H₂O and substances by electrolyzing and to remove substances by some means.

The water purifying device utilizing above methods can remove infinitesimal quantity of substances in the driving water, but in case of removing pollutants in untreated water where BOD and COD exceeds 10 ppm, and to purify them to the quality of the drinking water, the device would be large sized, and more electricity would be required.

Furthermore, the water passage which untreated water passes, filled with adsorbents such as active carbon, zeolite or ceramic mostly has vertical linear structure. However, the water passage in such structure causes water by-pass known as "water short cut", which leads to decrease in the capacity of the adsorbents in the water passage.

Therefore, this invention is a method and device to for water purifier which is able to supply water capable for drinking water from untreated water, by removing substances with the combination of electricity, active carbon and water passage structure. In other words, the object of this invention is a method and device to remove natural and artificial, organic and inorganic, non-biodegradability substances as well as microorganism including pathogenic bacteria from untreated water, by passing through the non linear water passage filled with active carbon after charging them in the electric field, and to purify them to water capable for drinking water.

### Disclosure of invention

This invention equips electrodes in order to charge untreated water. The angle against flow of water, distance between electrodes as well as quality of electrodes are established by the purifying capacity required.

The electricity to be charged on the electrodes will be either direct current, switching current or both combined. Voltage to be charged will be established according to the purifying capacity required.

The water passage filled with active carbon is established, based on the shape similar to "S", most part which is consists of nonlinear curve. This basic "S" type curve will be combined to establish overall structure, according to the purifying capacity required.

### Brief explanation on the drawings

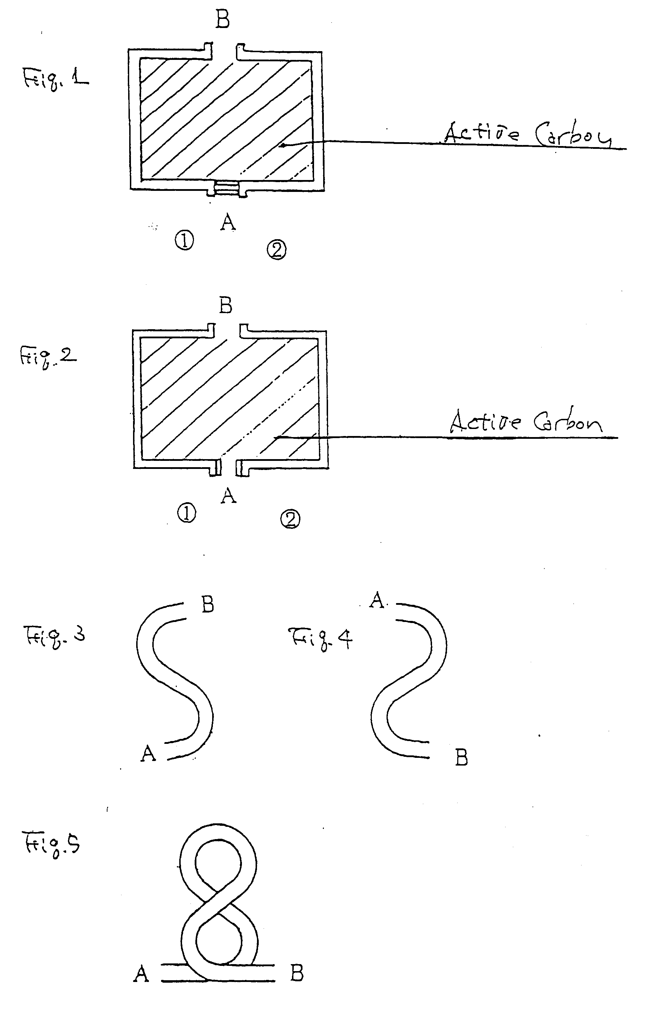

Drawing 1 and 2 shows the basic concept of this invention. Drawing 3 and 4 indicates the basic concept of water passage to avoid "water by-pass". Drawing 5 is an example of combination of "S" type basic water passage.

### Ideal conditions for execution of this invention

In order to explain this invention in details, the explanation will be made with the attached drawings.

Drawing 1 shows the basis of this invention. "A" is the in-flow side of untreated water and "B" is the exit. Electrodes for electric field are shown in the drawing as ① and ②. In drawing 1, electrodes are placed in direction to interrupt the flow of untreated water, but as shown in drawing 2, they can also be placed parallel to the flow of untreated water. Conductive and less dissolvable materials such as stainless and carbon shall be used as materials for electrodes.

Drawing 3 is the basic water passage plan when untreated water flow upward. Untreated water flows from "A" to "B", and the electrode is placed at "A".

Drawing 4 is the basic water passage plan in case untreated water flows downward. Untreated water flows from "A" to"B", and the electrode is placed at "A".

Drawing 5 is an example of combination of basic water passage. Untreated water flows from "A" to "B", and the electrode is placed at "A".

### Possibility of industrial use

As explained, this invention is a method and device to remove all substances except H₂O from untreated water. In this sense, this invention can be utilized in daily activities of human and industry, such as purifying natural water system, drinking water, reuse of drainage, removing pathogenic bacteria, and would contribute to purifying water on earth polluted by human being.

## Claims

1. Purifying method and device characteristic in removing substances in untreated water by passing untreated water through electric field and then in a water passage filled with active carbon.

2. Purifying method and device characteristic in its shape based on nonlinear water passage similar to "S" curve.
